# EUROPEAN PATENT SPECIFICATION

(11) **EP 3 806 384 B1**
(45) Date of publication and mention of the grant of the patent: **09.08.2023**
(21) Application number: 19923300.8
(22) Date of filing: 28.06.2019
(51) Int. Cl.: H04L 9/32, H04W 4/40, H04W 12/06, G10L 17/06, B60R 25/24, H04W 4/80, H04W 12/71, H04W 12/126, H04L 9/40

(54) **VEHICLE UNLOCKING AUTHENTICATION METHOD AND APPARATUS**
VERFAHREN UND VORRICHTUNG ZUR AUTHENTIFIZIERUNG EINER FAHRZEUGENTRIEGELUNG
PROCÉDÉ ET APPAREIL D'AUTHENTIFICATION DE DÉVERROUILLAGE DE VÉHICULE

(30) Priority: 29.03.2019 CN 201910256019
(43) Date of publication of application: 14.04.2021
(73) Proprietor: Guangzhou Chengxing Zhidong Motors Technology Co., Ltd., Guangzhou, Guangdong 510700 (CN); Guangzhou Xiaopeng Motors Technology Co., Ltd., Tianhe District Guangzhou Guangdong (CN)
(72) Inventor: CHENG, Ziyao, Guangzhou, Guangdong 510000 (CN)
(74) Representative: Ran, Handong
(86) International application number: PCT/CN2019/093468
(87) International publication number: WO 2020/199391

(56) References cited:
- CN-A- 103 010 158
- CN-A- 105 346 502
- CN-A- 108 068 758
- CN-A- 108 074 299
- CN-A- 108 377 191
- CN-A- 109 067 549
- CN-A- 109 067 549
- JP-A- 2005 175 879
- JP-A- 2005 175 879
- JP-A- 2009 275 350

## Description

### TECHNICAL FIELD

The invention relates to technical field of vehicles, and more particularly, to a vehicle unlocking authentication method and apparatus based on a terminal device.

### BACKGROUND

With development and popularization of Internet of Things (IOT), car manufacturers choose to use card-type car keys to replace traditional physical keys. Nowadays, the card-type car key needs to be verified before the cars are unlocked or locked. Generally, an authentication method for the card-type car keys includes following steps: when the card-type car key is adjacent to the car, the card-type car key can send key information and other data to an electronic equipment of the car, thereby the electronic equipment can realize a matching authentication with the card-type car key based on the key information.

However, it has been found in practice that a data transmission in an authentication process of the car and the card-type car key is completely dependent on a Bluetooth protocol stack, because different Bluetooth protocol stacks correspond to different security levels, and the Bluetooth protocol stacks with lower security levels may face problems such as channel hijacking or channel interference in application. Therefore, the above-mentioned authentication method between the cars and the card-type car keys cannot guarantee security of the data transmission.

CN109067549A discloses a virtual key two-way authentication system. In which, a locked end authentication request information editing unit is configured to generate locked end authentication request information according to a terminal public key and a locked private key in a locked key pair, and send the locked end authentication request information to a terminal verification unit. The terminal verification unit is configured to verify, according to a locked public key, whether the received locked end authentication request information includes a preset locked end ID, and whether a locked end signature is correct, if the preset locked end ID is included and the locked end signature is correct, the verification is passed.

JP2005175879A discloses an authentication system. In which, a user apparatus receives a random number from a certification apparatus and generates a certification code according to the random number and a key of the user apparatus, and sends the certification code and identification information of the user apparatus to the certification apparatus. The certification apparatus generates a user apparatus equivalent key according to the identification information, generates a certification code according to the user apparatus equivalent key and the random number, and compares the certification code received from the user apparatus and the certification code generated from the certification apparatus to authenticate the user apparatus.

CN108074299A discloses a method for controlling a smart phone key. In which, a smart key module generates a random number, encrypts the random number with a registration key, and sends the encrypted random number to the car door lock host. The car door lock host decrypts the encrypted random number to obtain a second random number. The smart key module verifies the second random number and generates a data key according to the second random number. The smart key module encrypts the data key with the registration key, and sends the encrypted data key to the car door lock host. The car door lock host decrypts the encrypted data key to obtain a second data key. The smart key module verifies the second data key and then completes the unlocking authentication with the car door lock host.

### SUMMARY

Embodiments of the invention provides a vehicle unlocking authentication method based on a terminal device, and a vehicle unlocking authentication apparatus based on a terminal device. Security of data transmission in a process of vehicle-to-car key authentication can be increased. The invention is set out in the appended set of claims.

Compared with the prior art, beneficial effects of the embodiments of the disclosure are as follows.

In the embodiment of the invention, the authentication request sent by the terminal device is received, the device fingerprint and the first authentication code are obtained. The pre-stored service key corresponding to the device fingerprint is searched, and the second authentication code is calculated according to the device fingerprint and the service key. Based on the first authentication code, the second authentication code, the device fingerprint and the service key, the third authentication code and the fourth authentication code are determined, thereby completing an unlocking authentication for the vehicle by the terminal device. It can be seen by implementing the embodiment of the present invention, the device fingerprint and the first authentication code can be obtained from the authentication request sent by the terminal device. And the second authentication code, the third authentication code, and the fourth authentication code can be calculated according to the device fingerprint, the first authentication code and the pre-stored service key, thereby realizing an unlocking authentication of the vehicle by the terminal device. Overall, the vehicle and the terminal device can realize an unlocking authentication process via calculated data, and thus safety of data transmission during the authentication process of the vehicle and the terminal device can be increased.

### BRIEF DESCRIPTION OF THE DRAWINGS

In order to more clearly illustrate the technical solutions in the embodiments of the present application, the drawings used in the description of the embodiments will be briefly described below. It is obvious that the drawings in the following description are just some embodiments of the invention. Other drawings may also be obtained from those of ordinary skill in the art in light of the inventive work.
FIG.1 is a schematic flowchart of a vehicle unlocking authenticating method based on a terminal device according to an example useful for understanding the invention but outside the scope of the invention as claimed;
FIG.2 is a schematic flowchart of a vehicle unlocking authenticating method based on a terminal device according to another embodiment of the invention;
FIG. 3 is a schematic flowchart of a vehicle unlocking authenticating method based on a terminal device according to yet another embodiment of the invention;
FIG.4 is a schematic flowchart of a vehicle unlocking authenticating method based on a terminal device according to still another embodiment of the invention;
FIG. 5 is a schematic structural diagram of a vehicle unlocking authentication apparatus based on terminal device according to an example useful for understanding the invention but outside the scope of the invention as claimed;
FIG.6 is a schematic structural diagram of a vehicle unlock authentication apparatus based on terminal device according to another embodiment of the invention;
FIG.7 is a schematic structural diagram of a vehicle unlocking authentication apparatus based on a terminal device according to yet another embodiment of the invention.

### DETAILED DESCRIPTION OF PREFERRED EMBODIMENTS

The technical solutions in the embodiments of the present invention will be clearly and completely described below in conjunction with the accompanying drawings in the embodiments of the present invention. Obviously, the described embodiments are only a part of the embodiments of the present invention, not all the embodiments. Based on the embodiments of the present invention, all other embodiments obtained by those of ordinary skill in the art without creative work shall fall within the protection scope of the present invention.

It should be noted that the terms "including" and "having" in the embodiments of the present invention and the drawings and any variations thereof are intended to cover non-exclusive inclusions. For example, a process, a method, a system, a product, or a device that includes a series of steps or units is not limited to the listed steps or units, but optionally includes unlisted steps or units, or optionally also includes other steps or units inherent in these processes, methods, products or equipment.

The embodiment of the present invention discloses a vehicle unlocking authentication method and device based on a terminal device. The vehicle unlocking authentication method and device can improve security of data transmission in an authentication process between a vehicle and the terminal device. Detailed descriptions are given below.

### First embodiment

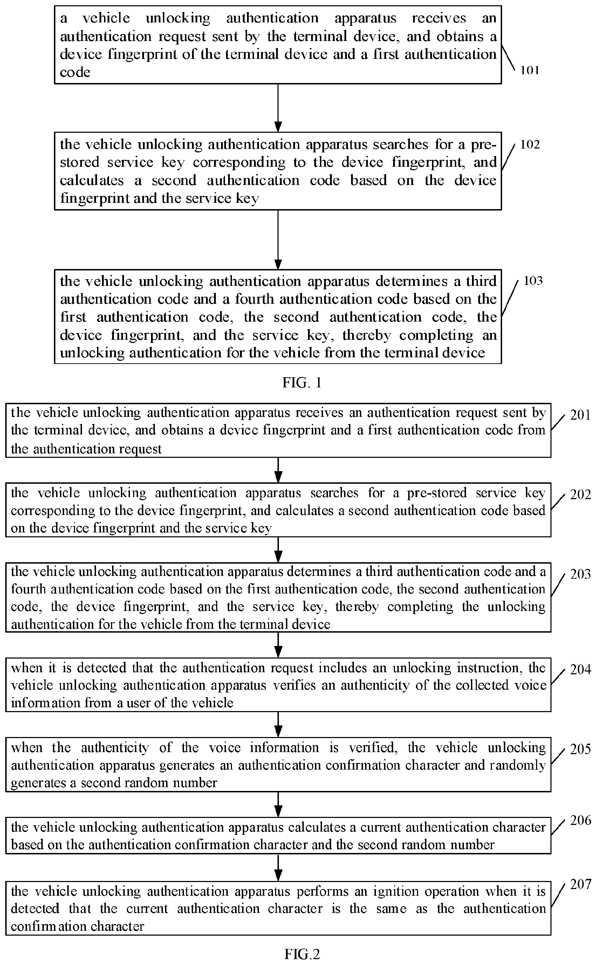

Refer to Fig.1, a schematic flowchart of a vehicle unlocking authentication method based on a terminal device according to an embodiment of the present invention is shown. As shown in Fig. 1, the method may include the following steps.

Step 101: a vehicle unlocking authentication apparatus receives an authentication request sent by the terminal device, and obtains a device fingerprint of the terminal device and a first authentication code.

In the embodiment of the present invention, the terminal device may be a smart phone, a smart bracelet, etc., and is not limited to the embodiment of the present invention. The vehicle unlocking authentication apparatus can be provided with a software system, such as an on-board system, and the vehicle unlocking authentication apparatus can realize control of any component of the vehicle, thereby facilitating operation of the vehicle by a user. The vehicle unlocking authentication apparatus can include an external Bluetooth module, a body control module, a voice recognition module, a security module, and a vehicle control module, etc. The vehicle unlocking authentication apparatus can control the external Bluetooth module and the terminal device to be connected by Bluetooth, thus operation of sending an authentication request by one terminal device to another terminal device via Bluetooth can be achieved. In addition, the vehicle unlocking authentication apparatus can also store device feature information of the terminal device bound to the vehicle unlocking authentication apparatus, so that the terminal device can be connected to the vehicle unlocking authentication apparatus correctly.

In the embodiment of the present invention, when the terminal device is located around a location range when a Bluetooth connection can be established with the vehicle unlocking authentication apparatus, an authentication request can be sent to the vehicle unlocking authentication apparatus via Bluetooth, and the vehicle unlocking authentication apparatus can be used to perform an authentication to the terminal device via the authentication request. In this embodiment, the user of the terminal device can control the vehicle only after the terminal device is authenticated. In addition, the authentication request may include information such as a device fingerprint of the terminal device and a first authentication code generated by the terminal device.

In this embodiment, the first authentication code may be a Hash-based Message Authentication code (HMAC), and the terminal device may calculate and generate a corresponding first authentication code according to its own device fingerprint and service key.

As an optional manner, a method for the terminal device to calculate and generate the corresponding first authentication code based on its own device fingerprint and service key may include a following operation: when the terminal device detects an input unlocking/locking instruction, the terminal device can obtain a device feature information of the terminal device. The device feature information may include at least the device fingerprint and the service key of the terminal device. The terminal device may calculate the first authentication code based on the device fingerprint and the service key. In addition, the terminal device may also send an authentication request including the device fingerprint and the first authentication code to the vehicle unlocking authentication apparatus. In this embodiment, the terminal device corresponds to a unique device feature information. The device feature information can include the device fingerprint and the service key of the terminal device. The device fingerprint can be used to uniquely identify the device feature of the terminal device. The terminal device can be uniquely identified by using the device fingerprint. The service key can be a service public-private key pair or a service symmetric key. The service key can be used to sign and encrypt the device feature information during a binding process of the terminal device and the vehicle unlocking authentication apparatus, thereby the device feature information stored in the vehicle unlocking authentication apparatus and based on a signature and an encryption of the service key can be verified by the terminal device storing the service key.

Step 102: the vehicle unlocking authentication apparatus searches for a pre-stored service key corresponding to the device fingerprint, and calculates a second authentication code based on the device fingerprint and the service key.

In this embodiment, the vehicle unlocking authentication apparatus may store the device feature information of the terminal device in advance during the binding process of the terminal device and the vehicle unlocking authentication apparatus. The device feature information may include the device fingerprint, the service key and other information of the terminal device. Therefore, the vehicle unlocking authentication apparatus can search for the service key corresponding to the device fingerprint contained in the authentication request. If the vehicle unlocking authentication apparatus can not find the service key corresponding to the device fingerprint, it can be considered that the terminal device and the vehicle unlocking authentication apparatus are not bound, therefore, the vehicle unlocking authentication apparatus can confirm that the terminal device has not been authenticated.

In this embodiment, the vehicle unlocking authentication apparatus may calculate a second authentication code according to the device fingerprint and the service key via a external Bluetooth module, and the second authentication code may also be HMAC.

Step 103: the vehicle unlocking authentication apparatus determines a third authentication code and a fourth authentication code based on the first authentication code, the second authentication code, the device fingerprint, and the service key, thereby completing an unlocking authentication for the vehicle from the terminal device.

The vehicle unlocking authentication apparatus determines the third authentication code and the fourth authentication code based on the first authentication code, the second authentication code, the device fingerprint, and the service key, thereby complete the unlocking authentication of the vehicle for the terminal device. The unlocking authentication method of the vehicle include the following steps:
When it is detected that the first authentication code is the same as the second authentication code, the vehicle unlocking authentication apparatus calculates a first random number and the service key to obtain an XOR (exclusive OR) value. The vehicle unlocking authentication apparatus sends a first response including the XOR value to the terminal device. The terminal device calculates a third authentication code according to the first response, and feeds back a second response including the third authentication code. When the second response is received, the vehicle unlocking authentication apparatus calculates a fourth authentication code according to the device fingerprint, the service key, and the first random number. When it is detected that the third authentication code and the fourth authentication code are the same, the vehicle unlocking authentication apparatus confirms that the terminal device has completed an unlocking authentication for the vehicle.

The calculated XOR value is sent to the terminal device, so that the terminal device feeds back the fourth authentication code obtained based on the XOR value. The unlocking authentication of the vehicle is realized based on the third authentication code and the fourth authentication code. In other words, in this embodiment, the unlocking authentication of the vehicle is realized by the third authentication code generated by the terminal device and the fourth authentication code generated by the vehicle. In this manner, an operation of unlocking the vehicle by the terminal device can be reliable.

In the embodiment of the present invention, the first authentication code and the second authentication code are both calculated based on the device fingerprint and the service key. The device fingerprints used by the terminal device and the vehicle unlocking authentication apparatus are the same. If the service key of the terminal device is the same as the service key of the vehicle unlocking authentication apparatus, the first authentication code and the second authentication code should be the same. In a typical application, if the first authentication code and the second authentication code are not the same, it can be confirmed that the terminal device are not bound to the vehicle unlocking authentication apparatus, and thus it can be confirmed that the authentication has not been verified by the terminal device. In addition, in this embodiment, the vehicle unlocking authentication apparatus may perform an XOR operation on the first random number and the service key to obtain the XOR value. The terminal device can calculate the XOR value included in the first response, the device fingerprint, and the service key to obtain the third authentication code. The third authentication code can also be a HMAC. Furthermore, the vehicle unlocking authentication apparatus may obtain the fourth authentication code by performing a hash operation according to the device fingerprint, the service key, and the first random number, and by using the external Bluetooth module. The fourth authentication code may also be a HMAC.

As an optional manner, a method for the terminal device to calculate the third authentication code and to feed back the second response including the third authentication code may include a following operation: the terminal device can read the XOR value from the received first response, and further calculate to obtain a third authentication code based on the XOR value and the device feature information. In addition, the terminal device can add the third authentication code to the second response, and can feed back the second response including the third authentication code to the vehicle unlocking authentication apparatus. In this manner, the terminal device can be authenticated by the vehicle unlocking authentication apparatus according to the second response.

As it is described in the method of Fig. 1, security of data transmission during the authentication process between the vehicle and the terminal device can be improved. In addition, an operation of unlocking the vehicle by the terminal device can be reliable.

### Second embodiment

Refer to Fig.1, a schematic flowchart of a vehicle unlocking authentication method based on a terminal device according to another embodiment of the present invention is shown. Compared to the first embodiment, a security authentication step before an ignition operation is performed to the vehicle after the terminal device is authenticated is introduced in the second embodiment of the present invention. The security authentication step may introduce voice recognition operation or unlocking authentication operation to the vehicle, thereby improving security of the vehicle. As shown in Figure 2, the vehicle unlocking authentication method based on the terminal device may include the following steps:
Step 201. The vehicle unlocking authentication apparatus receives an authentication request sent by the terminal device, and obtains a device fingerprint and a first authentication code from the authentication request. In this embodiment, the device fingerprint is generated by several device fingerprint feature values, and the device fingerprint feature values are collected by the terminal device.

In this embodiment, the terminal device can collect several device fingerprint feature values of the terminal devices. Taking a mobile phone as an example, the device fingerprint feature value may include a name, a model, a serial number, a hardware version, a Mobile Equipment Identifier (MEID), an International Mobile Equipment Identity (IMEI), and a mobile phone number, etc. The device fingerprint can be generated by no less than 200 device fingerprint feature values. In addition, the device fingerprint can be used to uniquely identify the device feature of the terminal device. That is, the terminal device can be uniquely determined according to the device fingerprint. In this manner, accuracy of verifying the identity of the terminal device can be greatly improved.

Step 202. The vehicle unlocking authentication apparatus searches for a pre-stored service key corresponding to the device fingerprint, and calculates a second authentication code based on the device fingerprint and the service key.

In this embodiment, the device fingerprint and the service key are stored in a one-to-one correspondence.

Step 203. The vehicle unlocking authentication apparatus determines a third authentication code and a fourth authentication code based on the first authentication code, the second authentication code, the device fingerprint, and the service key, thereby completing the unlocking authentication for the vehicle from the terminal device.

Step 204. When it is detected that the authentication request includes an unlocking instruction, the vehicle unlocking authentication apparatus verifies an authenticity of collected voice information from a user of the vehicle.

In the embodiment of the invention, the voice information may include the user's voiceprint information and/or semantic information. If the user's voiceprint information can be obtained from the voice information, the voiceprint can be verified to enable the vehicle unlocking authentication apparatus to detect whether the user corresponding to the voiceprint has an authority to start an ignition configuration. In a typical application, if the voiceprint is the same as the pre-stored voiceprint used to start the ignition configuration, it can be confirmed that the user corresponding to the voiceprint has the authority to start the ignition configuration. The authenticity of the voice information is verified. If the semantic information input by the user can be obtained from the voice information, a text information of the ignition configuration pre-stored in the vehicle unlocking authentication apparatus can be recognized, and the recognized semantic information and the text information can be used to compared.

In a typical application, if the semantic information is the same as the text information, it can be confirmed that the current user has the authority to start the ignition configuration. That is, the authenticity of the voice information is verified.

In an alternative embodiment, before the operation of step 204, the method may include the following step:
The vehicle unlocking authentication apparatus transmits an anti-theft authentication instruction to a body control module of the vehicle unlocking authentication apparatus via the Bluetooth module outside the vehicle. The vehicle unlocking authentication apparatus performs an anti-theft authentication on the vehicle by the body control module. when the vehicle's anti-theft authentication is verified, the vehicle unlocking authentication apparatus feeds back an authentication success message to the Bluetooth module by the body control module. When the Bluetooth module receives the authentication success message, the vehicle unlocking authentication apparatus detects whether the authentication request includes an unlocking instruction.

In this embodiment, the vehicle's anti-theft authentication can be verified by the body control module. Only after the anti-theft authentication is verified, can the operation corresponding to the unlocking/locking instruction be further performed, thereby ensuring security of the current vehicle.

In the embodiment of the present invention, the anti-theft authentication may be used to detect whether a door of the vehicle is opened illegally, or whether a window of the vehicle is opened illegally, etc. In a typical application, if operations such as illegal opening of the door or illegal opening of the window of the vehicle are not detected, it can be confirmed that the anti-theft authentication is verified.

Step 205: when the authenticity of the voice information is verified, the vehicle unlocking authentication apparatus generates an authentication confirmation character and randomly generates a second random number.

In the embodiment of the present invention, a target semantics can be recognized from the voice information, and the vehicle unlocking authentication apparatus needs to collect voice information including a specific semantics. Only when the user of the terminal device is positioned in the current vehicle, can the user speak voice including the specific semantics. In this embodiment, the authentication confirmation character can be a ACK (Acknowledgement). The ACK enables the vehicle unlocking authentication apparatus to verify a voice recognition process according to the authentication confirmation character and the second random number.

Step 206. The vehicle unlocking authentication apparatus calculates a current authentication character based on the authentication confirmation character and the second random number.

In the embodiment of the present invention, the vehicle unlocking authentication apparatus calculates the current authentication character based on the authentication confirmation character and the second random number. An operation of step 206 can be performed by a voice recognition module and a security module of the vehicle unlocking authentication apparatus. In operation, the recognition module generates the authentication confirmation character and randomly generates the third random number. The voice recognition module can also perform an XOR operation based on the third random number and the authentication confirmation character to obtain the authentication code. The voice recognition module can send a voice recognition request including the authentication confirmation character, the authentication code and the third random number to the security module of the vehicle unlocking authentication apparatus. The security module can calculate and obtain the current authentication character according to the authentication code and the third random number. In addition, since the current authentication character is obtained by an XOR operation of the third random number and the authentication code, if data transmission between the voice recognition module and the security module is correct, the current authentication character obtained can be the same as the authentication code.

Step 207. the vehicle unlocking authentication apparatus performs an ignition operation when it is detected that the current authentication character is the same as the authentication confirmation character.

In the embodiment of the present invention, before the ignition operation is performed, it can be determined whether the vehicle has reached the ignition start condition. The method for determining whether the vehicle has reached the ignition start condition may include a following operation: it is detected whether the vehicle is powered on. If the vehicle is powered on, the vehicle is detected if a brake pedal of the vehicle is depressed. If the brake pedal of the vehicle is depressed, it is detected whether a Bluetooth key is connected to the vehicle unlocking authentication apparatus. If the Bluetooth key is connected to the vehicle unlocking authentication apparatus, it is detected whether the anti-theft authentication of the Bluetooth module outside the vehicle and the anti-theft authentication of the body control module are verified. If the anti-theft authentication of the external Bluetooth module and the anti-theft authentication of the body control module are verified, it is detected whether an unlocking time of the Bluetooth key unlocking the vehicle is less than a preset time (e.g., the preset time can be three minutes), or it is detected whether the semantic recognition for the user is completed. If the unlocking time is less than the preset time or the semantic recognition for the user has been completed, it is detected whether the vehicle is not ignited and started yet. If the vehicle is not ignited and started yet, it can be confirmed that an igniting and starting condition is satisfied, a vehicle control module and the vehicle unlocking authentication apparatus can be triggered to perform an ignition operation of the vehicle. In this embodiment, either one of the condition that the unlocking duration of the Bluetooth key is less than the preset duration and the condition that the semantic recognition for the user has been completed can be realized.

In the embodiment of the present invention, once the operation of the above steps 204 to 207 is performed, the authenticity of the voice information of the user can be verified. When the authenticity of the voice information is verified, the vehicle can be controlled to further start the ignition operation and other operations. A real user of the terminal device can be ensured to match with the user information pre-stored in the vehicle.

As shown in FIG. 2, the security of data transmission during the authentication process between the vehicle and the terminal device can be improved. In addition, the safety of the vehicle can be ensured by performing the method described in Figure 2. Furthermore, a real user of the terminal device can be ensured to match with the user information pre-stored in the vehicle.

### Third embodiment

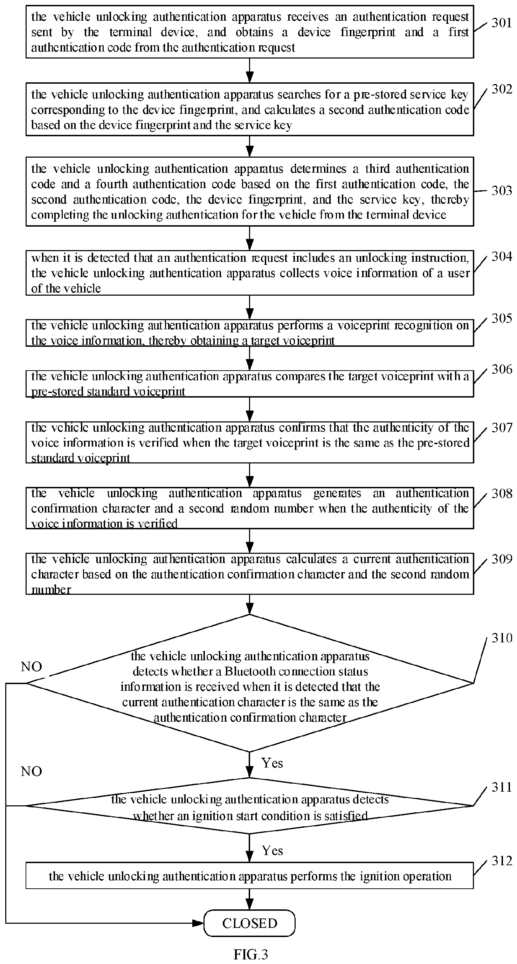

Referring to FIG. 3, a schematic flowchart of a vehicle unlocking authentication method based on a terminal device of another embodiment of the present invention is shown. Compared to the second embodiment, operation of voice recognition and operation of calculating a current authentication character will be explained in more detail in this embodiment. In addition, a step of determining whether the vehicle meets an ignition start condition is introduced to improve safety of an ignition operation of the vehicle. Accuracy of calculation of the authentication code and the current authentication character is increased. As shown in Fig. 3, the vehicle unlocking authentication method may include the following steps 301-312.

In this embodiment, steps 301-303 are similar to steps 101-103 respectively, and will not be repeatedly described in this embodiment.

Step 304. When it is detected that an authentication request includes an unlocking instruction, the vehicle unlocking authentication apparatus collects voice information of a user of the vehicle.

As an optional manner, the vehicle unlocking authentication apparatus collects the voice information of the user of the vehicle may include the following steps:
The vehicle unlocking authentication apparatus can generate a voice collection tips via a voice recognition module thereof, and the voice collection tips can include a semantic information that the user of the vehicle needs to say. The vehicle unlocking authentication apparatus can collect voice from the user of the vehicle via the voice recognition module. The unlocking authentication apparatus can extract the user's voiceprint information from the voice by the voice recognition module, and recognize a target semantics included in the voice. The vehicle unlocking authentication apparatus can generate a voice message via the voice recognition module. The voice message includes the user's voiceprint information and the target semantics.

In application, a notification can be sent to the user to speak a corresponding voice according to the voice information of the voice collection tips, so that the vehicle unlocking authentication apparatus can recognize location of the user according to different semantics in different time or different space during the voice recognition process. The vehicle unlocking authentication apparatus can determine that the user corresponding to the terminal device is located in the vehicle based on the voiceprint information. In this manner, accuracy of user recognition of the vehicle can be ensured.
Step 305. The vehicle unlocking authentication apparatus performs a voiceprint recognition on the voice information, thereby obtaining a target voiceprint;
Step 306. The vehicle unlocking authentication apparatus compares the target voiceprint with a pre-stored standard voiceprint;
Step 307. The vehicle unlocking authentication apparatus confirms that the authenticity of the voice information is verified when the target voiceprint is the same as the pre-stored standard voiceprint.

In this embodiment, steps 304 to 307 are performed, the voice information of the user unlocking the vehicle can be collected, and the voiceprint can be recognized from the semantic information. If it is detected that the recognized voiceprint is the same as the pre-stored standard voiceprint, it can be confirmed that the user corresponding to the voiceprint has an authority to start the ignition configuration. In this manner, safety of ignition of the vehicle can be improved.

Step 308. The vehicle unlocking authentication apparatus generates an authentication confirmation character and a second random number when the authenticity of the voice information is verified.
Step 309. The vehicle unlocking authentication apparatus calculates a current authentication character based on the authentication confirmation character and the second random number;
As an optional manner, the method for the vehicle unlocking authentication apparatus to calculate the current authentication character based on the authentication confirmation character and the second random number may include the following steps:
   The vehicle unlocking authentication apparatus performs an XOR operation on the authentication confirmation character and the second random number to obtain an authentication code. In addition, the vehicle unlocking authentication apparatus performs an XOR operation on the authentication code and the second random number to obtain the current authentication character.

In this embodiment, the authentication code and the current authentication character can be calculated via an XOR operation, so that the calculation of the authentication code and the current authentication character is clearer, and accuracy of the calculation of the authentication code and the current authentication character can be increased.

The vehicle unlocking authentication apparatus detects whether a Bluetooth connection status information is received when it is detected that the current authentication character is the same as the authentication confirmation character. If the Bluetooth connection status information is received, a step 311 is performed, or the step 310 is closed.

The vehicle unlocking authentication apparatus detects whether an ignition start condition is satisfied. If the ignition start condition is satisfied, a step 312 is performed, or the step 311 is closed.

The vehicle unlocking authentication apparatus performs the ignition operation when the ignition start condition is satisfied.

In this embodiment, the above steps 310 to 312 are performed to detect the Bluetooth connection status information and an ignition condition. Only when it is detected that the Bluetooth connection status information is received and the ignition condition is satisfied, can the ignition operation be performed by the vehicle, thus safety of the vehicle during ignition can be ensured.

As an optional manner, a method of the vehicle unlocking authentication apparatus performing the ignition operation may include the following steps.

The vehicle unlocking authentication apparatus obtains an unlocking duration of the vehicle. The vehicle unlocking authentication apparatus determines whether the unlocking duration is greater than a preset unlocking duration. The vehicle unlocking authentication apparatus confirms that the ignition start condition is satisfied when the unlocking duration is less than or equal to the preset unlocking duration. The vehicle unlocking authentication apparatus determines whether a security module of the vehicle receives the authentication confirmation character when the unlocking duration is greater than the preset unlocking duration. The vehicle unlocking authentication apparatus confirms that the ignition start condition is satisfied when the authentication confirmation character is received.

In this embodiment, the ignition start condition can be confirmed when the vehicle is unlocked for less than a preset maximum time, and the ignition start condition can also be confirmed when the vehicle's security module receives the authentication confirmation character. In this manner, methods for determining the ignition start condition are more diversified, and probability of starting the ignition start conditions can be increased.

As an optional manner, the embodiment of the present invention can also realize a locking authentication of the vehicle via the terminal device, and the method of realizing the locking authentication of the vehicle via the terminal device may include the following steps.

When the terminal device detects a locking instruction from the user, the terminal device can obtain the device feature information of the terminal device. The device feature information can include at least a device fingerprint and a service key of the terminal device. The terminal device can calculate to obtain the fifth authentication code by the device fingerprint and the service key. In addition, the terminal device can send an authentication request including the device fingerprint and the fifth authentication code to the vehicle locking authentication apparatus.

When the Bluetooth module of the vehicle locking authentication apparatus receives an authentication request sent by the terminal device, the vehicle locking authentication apparatus can read the device fingerprint and the fifth authentication code from the authentication request by the Bluetooth module. The vehicle locking authentication apparatus can search the pre-stored service key corresponding to the device fingerprint via the external Bluetooth module, and calculate the sixth authentication code based on the device fingerprint and service key. When it is confirmed that the fifth authentication code is the same as the sixth authentication code, the vehicle locking authentication apparatus can calculate a fourth random number generated randomly and a service key via the external Bluetooth module to obtain a current XOR value. The vehicle locking authentication apparatus can send a third response including the current XOR value to the terminal device via the external Bluetooth module.

When the third response sent by the vehicle unlocking authentication apparatus is detected, the terminal device reads the current XOR value from the third response. The terminal device can obtain a fifth random number by performing an XOR operation on the current XOR value and the service key. The terminal device can calculate a seventh authentication code according to the fifth random number and the device fingerprint, as well as the service key included in the device feature information. The terminal device can send a third response including the seventh authentication code to the vehicle locking authentication apparatus.

When the Bluetooth module of the vehicle locking authentication apparatus receives the third response that includes the seventh authentication code and that was sent by the terminal device, the vehicle locking authentication apparatus can calculate the device fingerprint, the business key and the fourth random number via the Bluetooth module to obtain an eighth authentication code. When the seventh authentication code is the same as the eighth authentication code, the vehicle locking authentication apparatus can confirm that the terminal device is authenticated by using the external Bluetooth module. The vehicle locking authentication apparatus can transmits an anti-theft authentication instruction to the body control module of the vehicle unlocking authentication apparatus via the external Bluetooth module. The vehicle locking authentication apparatus can perform an anti-theft authentication on the vehicle via the body control module. When the anti-theft authentication is verified, the vehicle locking authentication apparatus can feed back an anti-theft certification information (that indicated the anti-theft authentication is verified) to the Bluetooth module via body control module. When the Bluetooth module of the vehicle locking authentication apparatus receives the anti-theft certification information, the vehicle locking authentication apparatus can transmit a locking instruction included in the authentication request to the body control module via the Bluetooth module, thereby the body control module can detect whether the a locking condition is satisfied or not. if the locking condition is satisfied, the vehicle locking authentication apparatus can perform a locking and power-off operation on the vehicle via the body control module, and further perform a turn-off operation to lock the vehicle.

In this embodiment, by performing the above-mentioned locking operation, both the unlocking operation of the vehicle and the locking operation of the vehicle can be realized based on a Bluetooth key of the terminal device. Control of the vehicle by the terminal device can be improved.

As the method described in FIG. 3, security of data transmission during the authentication process between the vehicle and the terminal device can be improved. In addition, accuracy of user recognition of the vehicle can be increased. In addition, safety of igniting the vehicle can be increased. Furthermore, the method described in Figure 3 can be applied to improve accuracy of calculation of the authentication code and the current authentication character. In this embodiment, the method described in Figure 3 ensures safety of the vehicle during ignition. Implementing the method described in FIG. 3 increases probability of starting the ignition start condition. Moreover, control of the vehicle by the terminal device can be improved.

### Fourth embodiment

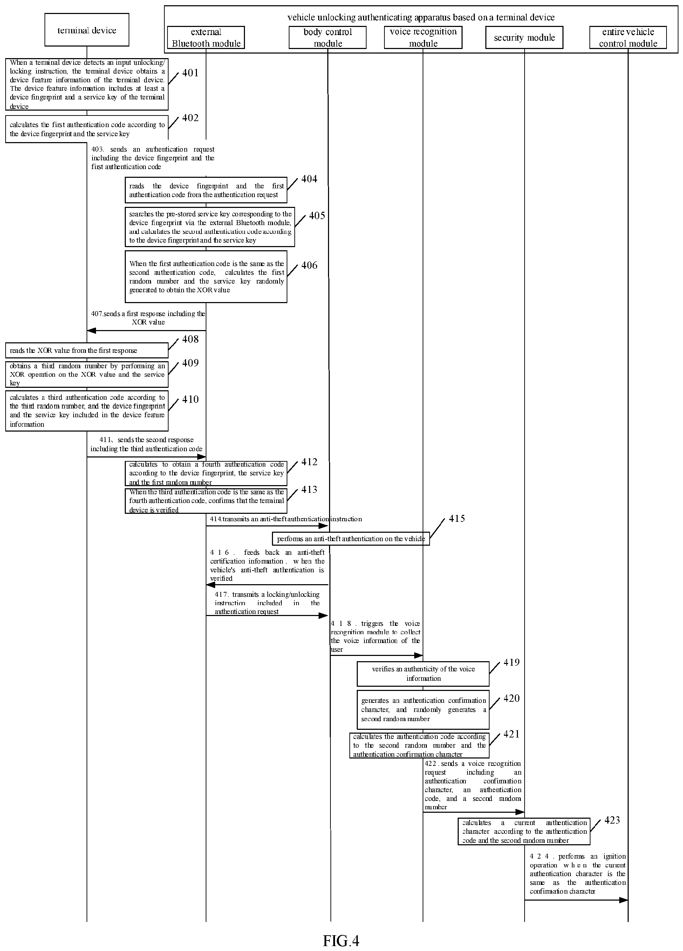

Referring to FIG. 4, a schematic flowchart of another vehicle unlocking authenticating method based on a terminal device and disclosed in an embodiment of the present invention is shown. As shown in Figure 4, a vehicle unlocking authentication apparatus based on a terminal device and a terminal device located on the vehicle are introduced in the vehicle unlocking authenticating method. The vehicle unlocking authentication apparatus based on the terminal device may include an external Bluetooth module, a body control module, a voice recognition module, a security module, and a vehicle control module, etc. The vehicle unlocking authentication method based on the terminal device may include the following steps.

Step 401. When a terminal device detects an input unlocking/locking instruction, the terminal device obtains a device feature information of the terminal device. The device feature information includes at least a device fingerprint and a service key of the terminal device.

Step 402. The terminal device calculates the first authentication code according to the device fingerprint and the service key.

Step 403. The terminal device sends an authentication request to the vehicle unlock authentication apparatus based on the terminal device. The authentication request includes the device fingerprint and the first authentication code.

Step 404. When the external Bluetooth module of the vehicle unlocking authentication apparatus receives the authentication request sent by the terminal device, the vehicle unlocking authentication apparatus based on the terminal device reads the device fingerprint and the first authentication code from the authentication request via the external Bluetooth module.

Step 405. The vehicle unlocking authentication apparatus based on the terminal device searches the pre-stored service key corresponding to the device fingerprint via the external Bluetooth module, and calculates the second authentication code according to the device fingerprint and the service key.

Step 406. When the first authentication code is the same as the second authentication code, the vehicle unlocking authentication apparatus based on the terminal device calculates the first random number and the service key randomly generated via the external Bluetooth module to obtain the XOR value.

Step 407. The vehicle unlocking authentication apparatus based on the terminal device sends a first response including the XOR value to the terminal device via the external Bluetooth module.

Step 408. When detecting the first response sent by the vehicle unlocking authentication apparatus, the terminal device reads the XOR value from the first response.

Step 409. The terminal device obtains a third random number by performing an XOR operation on the XOR value and the service key.

Step 410. The terminal device calculates a third authentication code according to the third random number, and the device fingerprint and the service key included in the device feature information.

Step 411. The terminal device sends a second response including the third authentication code to the vehicle unlocking authentication apparatus.

Step 412. When the Bluetooth module of the vehicle unlocking authentication apparatus receives the second response including the third authentication code sent by the terminal device, the vehicle unlocking authentication apparatus calculates to obtain a fourth authentication code according to the device fingerprint, the service key and the first random number via the Bluetooth module.

Step 413. When the third authentication code is the same as the fourth authentication code, the vehicle unlocking authentication apparatus based on the terminal device confirms that the terminal device is verified by the external Bluetooth module.

Step 414. The vehicle unlocking authentication apparatus based on the terminal device transmits an anti-theft authentication instruction to the body control module of the vehicle unlocking authentication apparatus via the external Bluetooth module.

Step 415. The vehicle unlocking authentication apparatus based on the terminal device performs an anti-theft authentication on the vehicle via the body control module.

Step 416. When the vehicle's anti-theft authentication is verified, the vehicle unlocking authentication apparatus feeds back an anti-theft certification information to the external Bluetooth module via the body control module.

Step 417. When the Bluetooth module of the vehicle unlocking authentication apparatus receives the anti-theft certification information (that indicated the anti-theft authentication is verified), the vehicle unlocking authentication apparatus transmits a locking/unlocking instruction included in the authentication request to the body control module via the external Bluetooth module. The locking/unlocking instruction is used to enable the body control module to perform operations corresponding to the locking/unlocking instructions.

Step 418. When the body control module detects that the authentication request includes an unlocking instruction, the vehicle unlocking authentication apparatus triggers the voice recognition module to collect the voice information of the user via the body control module.

Step 419. The vehicle unlocking authentication apparatus based on the terminal device verifies an authenticity of the voice information via the voice recognition module.

Step 420. When the voice recognition module determines that the voice information is verified, the vehicle unlocking authentication apparatus based on the terminal device generates an authentication confirmation character via the voice recognition module, and randomly generates a second random number.

Step 421. The vehicle unlocking authentication apparatus based on the terminal device calculates the authentication code according to the second random number and the authentication confirmation character via the voice recognition module.

Step 422. The vehicle unlocking authentication based on the terminal device sends a voice recognition request including an authentication confirmation character, an authentication code, and a second random number to the security module of the vehicle unlocking authentication apparatus via the voice recognition module.

Step 423. The vehicle unlocking authentication apparatus based on the terminal device calculates a current authentication character via the security module according to the authentication code and the second random number.

Step 424. When the security module determines that the current authentication character is the same as the authentication confirmation character, the vehicle unlocking authentication apparatus based on the terminal device performs an ignition operation via the vehicle control module.

It can be seen that by performing the authentication method described in Fig. 4, the authentication code and the XOR value can be generated according to the device feature information, so that the authentication code and the XOR value can be transmitted between the vehicle unlocking authentication apparatus and the terminal device. Therefore an authentication of the terminal device can be realized according to the authentication code and the XOR value. In this manner, calculated data can be transmitted between the vehicle unlocking authentication apparatus and the terminal device. Security of data transmitted in the authentication process of the terminal device using the vehicle unlocking authentication apparatus can be improved.

Fifth embodiment is just an example useful for understanding the invention but outside the scope of the invention as claimed.

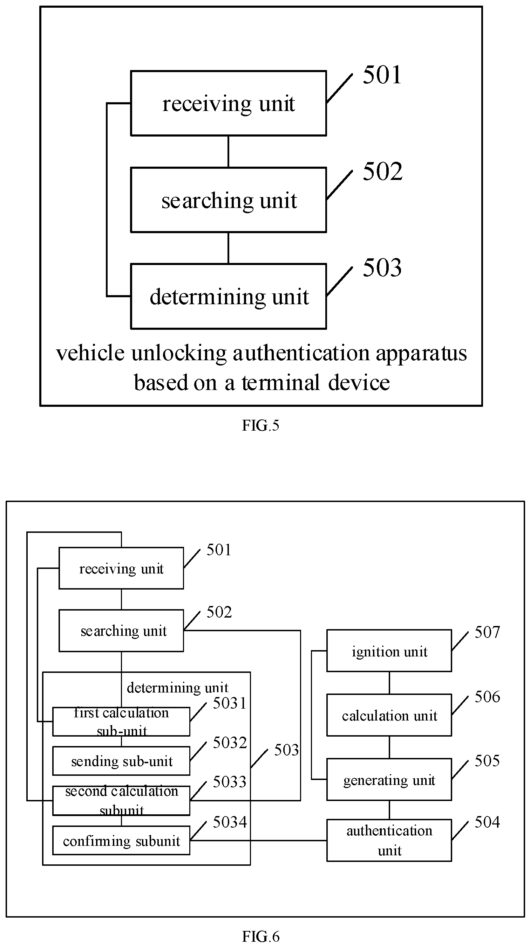

Referring to FIG. 5, a schematic structural diagram of a vehicle unlocking authentication apparatus based on a terminal device disclosed in an embodiment of the present invention is shown. As shown in FIG. 5, the vehicle unlocking authentication apparatus based on the terminal device may include the following units.

The vehicle unlocking authentication apparatus includes a receiving unit 501. The receiving unit 501 is used to receive an authentication request sent by the terminal device, and obtains a device fingerprint and a first authentication code from the authentication request.

As an optional manner, the receiving unit 501 receives the authentication request sent by the terminal device, and the method for obtaining the device fingerprint and the first authentication code may be:
The authentication request sent by the terminal device is received, and the device fingerprint and the first authentication code are obtained from the authentication request, and the device fingerprint is generated from several device fingerprint feature values collected by the terminal device.

In this embodiment, the terminal device can collect several device fingerprint feature values of the terminal devices. Taking a mobile phone as an example, the device fingerprint feature value may include a name, a model, a serial number, a hardware version, a Mobile Equipment Identifier (MEID), an International Mobile Equipment Identity (IMEI), and a mobile phone number, etc. The device fingerprint can be generated by no less than 200 device fingerprint feature values. In addition, the device fingerprint can be used to uniquely identify the device characteristics of the terminal device. That is, the terminal device can be uniquely determined according to the device fingerprint. In this manner, accuracy of verifying the identity of the terminal device can be greatly improved.

The vehicle unlocking authentication apparatus includes a searching unit 502. The searching unit 502 is used to search for the service key, and calculates a second authentication code based on the device fingerprint and the service key. The service key is received by the receiving unit 501 and corresponds to the device fingerprint. In this embodiment, the device fingerprint and the service key are stored in a one-to-one correspondence.

The vehicle unlocking authentication apparatus includes a determining unit 503. The determining unit 503 is used to determine a third authentication code and a fourth authentication code based on the first authentication code from the receiving unit 501, the second authentication code from the searching unit 502, the device fingerprint, and the service key, thereby completing the unlocking authentication for the vehicle via the terminal device.

The vehicle unlocking authentication apparatus described in FIG. 5 can improve security of data transmission during an authentication process between the vehicle and the terminal device.

### Sixth embodiment

Referring to FIG. 6, a schematic structural diagram of another vehicle unlocking authentication apparatus based on a terminal device disclosed in an embodiment of the present invention is shown. The vehicle unlocking authentication apparatus shown in FIG. 6 is optimized from the vehicle unlocking authentication apparatus shown in FIG. 5. Compared to the vehicle unlocking authentication apparatus shown in FIG. 5, the vehicle unlocking authentication apparatus shown in FIG. 6 introduces a security authentication operation. The security authentication operation can be performed before an ignition operation and after an authentication operation of the terminal device. In this embodiment, operations such as voice recognition and unlocking authentication on the vehicle improves safety of the vehicle. The determining unit 503 of the vehicle unlocking authentication apparatus shown in FIG. 6 includes a first calculation sub-unit 5031, a sending sub-unit 5032, a second calculation sub-unit 5033, and a confirming sub-unit 5034.

The first calculation sub-unit 5031 is used to calculate the first random number and the service key, thereby obtaining an XOR value, when the first authentication code from the receiving unit 501 is the same as the second authentication code from the searching unit 502.

The sending sub-unit 5032 is used to send a first response including the XOR value obtained by the first calculation subunit 5031 to the terminal device, so that the terminal device calculates a third authentication code according to the first response, and feeds back a second response including a third authentication code.

The second calculation subunit 5033 is used to calculate a fourth authentication code according to the device fingerprint obtained by the receiving unit 501and the service key obtained by the searching unit 502, as well as the first random number when the second response is received.

The confirming subunit 5034 is used to confirm that the unlocking authentication of the vehicle by the terminal device is completed when it is detected that the third authentication code is the same as the fourth authentication code obtained by the second calculating subunit 5033.

The calculated XOR value is sent to the terminal device, so that the terminal device feeds back the fourth authentication code obtained based on the XOR value. The unlocking authentication of the vehicle is realized based on the third authentication code and the fourth authentication code. In other words, in this embodiment, the unlocking authentication of the vehicle is realized by the third authentication code generated by the terminal device and the fourth authentication code generated by the vehicle. In this manner, an operation of unlocking the vehicle by the terminal device can be reliable.

As an optional manner, the vehicle unlocking authentication apparatus based on the terminal device shown in FIG. 6 may further include an authentication unit 504, a generating unit 505, a calculation unit 506, and an ignition unit 507.

The authentication unit 504 is used to verify authenticity of the collected voice information of the vehicle user after the confirming subunit 5034 confirms that the terminal device has completed the unlocking authentication of the vehicle. When it is detected that the authentication request includes an unlocking instruction, the authentication unit 504 is also used to verify authenticity of the collected voice information.

The generating unit 505 is used to generate an authentication confirmation character and randomly generate a second random number when the authenticity of the voice information is verified by the authentication unit 504.

The calculation unit 506 is used to calculate a current authentication character based on the authentication confirmation character and the second random number generated by the generating unit 505;

The ignition unit 507 is used to perform an ignition operation when it is detected that the current authentication character obtained by the calculation unit 506 is the same as the authentication confirmation character generated by the generating unit 505.

In the embodiment of the present invention, the authenticity of the voice information of the user can be verified. When the authenticity of the voice information is verified, the vehicle can be controlled to further start the ignition operation and other operations. A real user of the terminal device can be ensured to match with the user information pre-stored in the vehicle.

As an optional manner, the authentication unit 504 can be used to perform the following operation.

An anti-theft authentication instruction can be transmitted to the body control module of the vehicle unlocking authentication apparatus via the external Bluetooth module. An anti-theft authentication can be performed on the vehicle via the body control module. When the anti-theft authentication is verified, an anti-theft certification information (that indicated the anti-theft authentication is verified) can be fed back to the Bluetooth module via the body control module. When the Bluetooth module receives the anti-theft certification information, it is detected whether a locking instruction is included in the authentication request.

In this embodiment, the vehicle's anti-theft authentication can be verified by the body control module. and only after the anti-theft authentication is verified, can the operation corresponding to the unlocking/locking instruction be further performed, thereby ensuring security of the current vehicle.

As shown in FIG. 6, the vehicle unlocking authentication apparatus can be used to improve the security of data transmission during the authentication process between the vehicle and the terminal device can be improved. In addition, an operation of unlocking the vehicle by the terminal device can be reliable. A real user of the terminal device can be ensured to match with the user information pre-stored in the vehicle. Furthermore, the safety of the vehicle can be ensured by performing the device described in Fig.6.

### Seventh embodiment

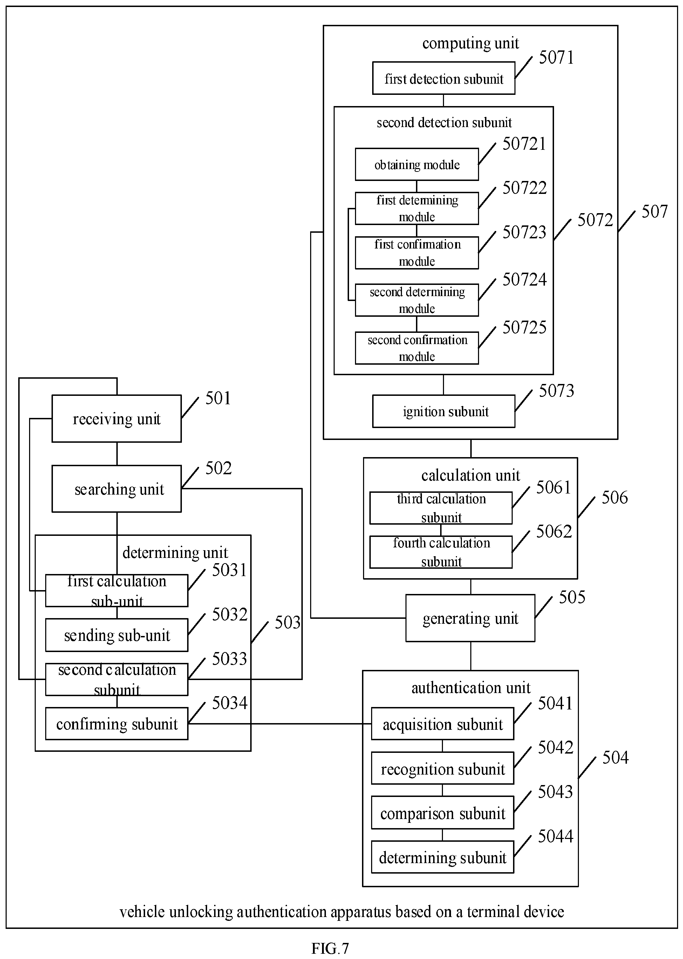

Referring to FIG. 7, a schematic structural diagram of another vehicle unlocking authentication apparatus based on a terminal device disclosed in an embodiment of the present invention is shown. The vehicle unlocking authentication apparatus shown in FIG. 7 is optimized from the vehicle unlocking authentication apparatus shown in FIG. 6. Compared to the vehicle unlocking authentication apparatus shown in FIG. 6, the vehicle unlocking authentication apparatus shown in FIG. 7 explains in more detail the method of voice recognition and the method of calculating the current authentication characters. Operation of determining whether the vehicle meets an ignition start condition is introduced to improve safety of an ignition of the vehicle. To improve accuracy of the authentication code and the current authentication character calculation, an authentication unit 504 of the vehicle unlocking authentication device shown in FIG. 7 may include: an acquisition subunit 5041, a recognition subunit 5042, a comparison subunit 5043, and a determining subunit 5044.

The acquisition subunit 5041 is used to collect the voice information of the user of the vehicle after the confirmation subunit 5034 confirms that the terminal device has completed the unlocking authentication of the vehicle and when it is detected that the authentication request includes an unlocking instruction.

As an optional manner, the collection subunit 5041 collects the voice information of the user of the vehicle may include the following steps:
A voice collection tips can be generated via a voice recognition module, and the voice collection tips can include a semantic information that the user of the vehicle needs to say. The voice from the user of the vehicle can be collected via the voice recognition module. The user's voiceprint information can be extracted from the voice by the voice recognition module, and a target semantics included in the voice can be recognized. In addition, the voice recognition module can generate a voice message. The voice message includes the user's voiceprint information and the target semantics.

In application, a notification can be sent to the user to speak a corresponding voice according to the voice information of the voice collection tips, so that the vehicle unlocking authentication apparatus can recognize location of the user according to different semantics in different time or different space during the voice recognition process. The vehicle unlocking authentication apparatus can determine that the user corresponding to the terminal device is located in the vehicle based on the voiceprint information. In this manner, accuracy of user recognition of the vehicle can be ensured.

The recognition subunit 5042 can be used to perform a voiceprint recognition on the voice information, thereby obtaining a target voiceprint.

The comparison subunit 5043 can be used to compare the target voiceprint with a pre-stored standard voiceprint;
The determining subunit 5044 can be used to confirm that the authenticity of the voice information is verified when the target voiceprint is the same as the pre-stored standard voiceprint.

In this embodiment, the voice information of the user unlocking the vehicle can be collected, and the voiceprint can be recognized from the semantic information. If it is detected that the recognized voiceprint is the same as the pre-stored standard voiceprint, it can be confirmed that the user corresponding to the voiceprint has the authority to start the ignition configuration, thereby improving the safety of the ignition of the vehicle.

As an optional manner, the calculation unit 506 of the vehicle unlocking authentication apparatus shown in FIG. 7 may include a third calculation subunit 5061 and a fourth calculation subunit 5062.

The third calculation subunit 5061 is used to perform an XOR calculation of the authentication confirmation character and the second random number to obtain an authentication code.

The fourth calculation subunit 5062 is used to perform an XOR calculation on the authentication code obtained by the third calculation subunit 5061 and the second random number to obtain a current authentication character.

In this embodiment, the authentication code and the current authentication character can be calculated via an XOR operation, so that the calculation of the authentication code and the current authentication character is clearer, and accuracy of the calculation of the authentication code and the current authentication character can be increased.

As an optional manner, the ignition unit 507 of the vehicle unlocking authentication apparatus shown in FIG. 7 may include a first detection subunit 5071, a second detection subunit 5072, and an ignition subunit 5073.

The first detection subunit 5071 is used to detect whether a Bluetooth connection status information is received when it is detected that the current authentication character is the same as the authentication confirmation character.

The second detection subunit 5072 is used to detect whether an ignition start condition is satisfied when the Bluetooth connection status information is received.

The ignition subunit 5073 is used to perform an ignition operation when the ignition start condition is satisfied.

In this embodiment, the Bluetooth connection status information and an ignition condition can be detected. Only when it is detected that both the Bluetooth connection status information and the ignition condition are satisfied, can the ignition operation be performed by the vehicle, thus safety of the vehicle during ignition can be ensured.

As an optional manner, the second detection subunit 5072 of the vehicle unlocking authentication apparatus shown in FIG. 7 may include an obtaining module 50721, a first determining module 50722, a first confirmation module 50723, a second determining module 50724, and a second confirmation module 50725.

The obtaining module 50721 is used to obtain an unlocking duration of the vehicle when the Bluetooth connection status information is received. The first determining module 50722 is used to determine whether the unlocking duration is greater than a preset unlocking duration. The first confirmation module 50723 is used to confirm that the ignition start condition is satisfied when the unlocking duration is less than or equal to the preset unlocking duration. The second determining module 50724 is used to determine whether a security module of the vehicle receives the authentication confirmation character when the unlocking duration is greater than the preset unlocking duration. The second confirmation module 50725 is used to confirm that the ignition start condition is satisfied when the authentication confirmation character is received.

In this embodiment, the ignition start condition can be confirmed when the vehicle is unlocked for less than a preset maximum time, and the ignition start condition can also be confirmed when the vehicle's security module receives the authentication confirmation character. In this manner, methods for determining the ignition start condition are more diversified, and probability of starting the ignition start conditions can be increased.

As the vehicle unlocking authentication apparatus described in FIG. 7, security of data transmission during the authentication process between the vehicle and the terminal device can be improved. In addition, safety of igniting the vehicle can be increased. Accuracy of user recognition of the vehicle can be increased. Furthermore, the vehicle unlocking authentication apparatus described in Figure 7 can be applied to improve accuracy of calculation of the authentication code and the authentication character. In this embodiment, the vehicle unlocking authentication apparatus described in Figure 7 ensures safety of the vehicle during ignition. Implementing the vehicle unlocking authentication apparatus described in FIG. 7 increases probability of starting the ignition start condition.

The embodiment of the present invention discloses a vehicle. The vehicle includes a vehicle unlocking authentication apparatus based on a terminal device.

The embodiment of the present invention also discloses a computer-readable storage medium. The computer-readable storage medium stores program codes. The program code includes instructions for executing part or all of the steps in the above methods.

The embodiment of the present invention also discloses a computer program product. The computer program product runs on a computer. The computer is used to execute part or all of the steps of the method in the above embodiments.

The embodiment of the present invention also discloses an application publishing platform. The application publishing platform is used to publish a computer program product. When the computer program product runs on a computer, the computer is used to execute parts or all of the steps of the method in the above embodiments.

It should be understood that the "embodiment of the present invention" mentioned throughout the specification means that a specific feature, structure, or characteristic related to the embodiment is included in at least one embodiment of the present invention. Therefore, appearance of "in the embodiments of the present invention" in various places throughout the specification does not necessarily refer to the same embodiment. In addition, these specific features, structures or characteristics can be combined in one or more embodiments in any suitable manner. Those skilled in the art should also know that the embodiments described in the specification are all optional embodiments, and the actions and modules involved are not necessarily required by the present invention.

In various embodiments of the present invention, it should be understood that a sequence number of the aforementioned processes does not mean a necessary sequence of execution order. The execution order of each process should be determined by its function and internal logic, and should not be constituted by any limitation in the implementation process of the embodiments of the present invention. In addition, the terms "system" and "network" in the specification are often used interchangeably in this invention. It should be understood that the term "and/or" in this invention is only used to describing associated objects, and is used to indicate that there can be three types of relationships, such as A and/or B, which can mean: A alone exists, and A and B exist at the same time, and B alone exists. In addition, the character "/" in this invention generally indicates that the associated objects before and after are introduced in an "or" relationship.

In the embodiments provided by the present invention, it should be understood that "B corresponding to A" means that B is associated with A, and B can be determined according to A. However, it should also be understood that determining B according to A does not mean determining B only according to A, and B can also be determined according to A and/or other information.

Those of ordinary skill in the art can understand that all or part of the steps in the various methods of the above-mentioned embodiments can be completed by a program instructing relevant hardware. The program can be stored in a computer-readable storage medium. The storage medium includes read-only Memory (Read-Only Memory, ROM), Random Access Memory (RAM), Programmable Read-only Memory (PROM), Erasable Programmable Read Only Memory (Erasable Programmable Read Only Memory, EPROM), One-time Programmable Read-Only Memory (OTPROM), Electronically-Erasable Programmable Read-Only Memory (EEPROM), CD-ROM (Compact Disc) Read-Only Memory, CD-ROM) or other optical disk storage, magnetic disk storage, tape storage, or any other computer-readable medium that can be used to carry or store data.

The units described above as separate components may or may not be physically separated, and the components displayed as units may or may not be physical units, and may be located in one place or distributed on multiple network units. Some or all of the units can be selected according to actual needs to achieve the purpose of the solution of the embodiments.

In addition, the functional units in the embodiments of the present invention may be integrated into one processing unit, or each unit may exist alone physically, or two or more units may be integrated into one unit. The above-mentioned integrated unit can be implemented in the form of hardware or software functional unit.

If the above integrated unit is implemented in the form of a software functional unit and sold or used as an independent product, it can be stored in a computer-accessible memory. Based on this understanding, the essence of the technical solution of the present invention or the part that contributes to the existing technology or all or part of the technical solution can be embodied in the form of a software product, and the computer software product is stored in a memory. Including several requests to make a computer device (which may be a personal computer, a server or a network device, etc., specifically a processor in a computer device) execute some or all of the steps of the above methods of the various embodiments of the present invention.

The foregoing describes in detail a vehicle unlocking authentication method based on a terminal device and a vehicle unlocking authentication apparatus disclosed in the embodiments of the present invention.

## Claims

1. A vehicle unlocking authentication method, comprising:
receiving (201, 301, 403) an authentication request sent by a terminal device, wherein the authentication request comprises a device fingerprint of the terminal device and a first authentication code; and
searching (202, 302, 405) for a pre-stored service key corresponding to the device fingerprint, and calculating a second authentication code based on the device fingerprint and the service key;
the method being **characterized by** further comprising:
performing (406) an XOR operation on a first random number and the service key to obtain an XOR value, when it is detected that the first authentication code is the same as the second authentication code,
sending (407) a first response including the XOR value to the terminal device, wherein the terminal device calculates a third authentication code according to the first response and feeds back (411) a second response including the third authentication code;
calculating (412) a fourth authentication code according to the device fingerprint, the service key, and the first random number, when the second response is received; and
confirming (413) that an unlocking authentication for the vehicle by the terminal device is completed, when it is detected that the third authentication code is the same as the fourth authentication code.

2. The method of claim 1, after the operation of confirming (413) that the unlocking authentication of the vehicle by the terminal device is completed, further comprising:
verifying (204, 419) an authenticity of collected voice information of a user of the vehicle when it is detected that the authentication request including an unlocking instruction;
generating (205, 308, 420) an authentication confirmation character and a second random number when the authenticity of the voice information is verified;
calculating (206, 309, 423) a current authentication character based on the authentication confirmation character and the second random number;
performing (207, 424) an ignition operation when it is detected that the current authentication character is the same as the authentication confirmation character.

3. The method of claim 2, wherein the step of verifying (204) an authenticity of a collected voice information of a vehicle user when it is detected that the authentication request including an unlocking instruction comprises:
collecting (304) the voice information of the user of the vehicle when it is detected that the authentication request includes an unlocking instruction;
performing (305) a voiceprint recognition on the voice information to obtain a target voiceprint;
comparing (306) the target voiceprint with a pre-stored standard voiceprint;
confirming (307) that the authenticity of the voice information is verified when the target voiceprint is the same as the pre-stored standard voiceprint.

4. The method of claim 3, wherein the step of calculating (206, 309) a current authentication character based on the authentication confirmation character and the second random number comprises:
performing an XOR operation on the authentication confirmation character and the second random number to obtain an authentication code;
performing an XOR operation on the authentication code and the second random number to obtain the current authentication character.

5. The method of claim 4, wherein the step of performing (207) an ignition operation when it is detected that the current authentication character is the same as the authentication confirmation character comprises:
detecting (310) whether a Bluetooth connection status information is received when it is detected that the current authentication character is the same as the authentication confirmation character;
detecting (311) whether an ignition start condition is satisfied when the Bluetooth connection status information is received;
performing (312) the ignition operation when the ignition start condition is satisfied.

6. The method of claim 5, wherein the step of detecting (311) whether an ignition start condition is satisfied or not when the Bluetooth connection status information is received comprises:
obtaining an unlocking duration of the vehicle when the Bluetooth connection status information is received;
determining whether the unlocking duration is greater than a preset unlocking duration;
confirming that the ignition start condition is satisfied when the unlocking duration is less than or equal to the preset unlocking duration;
determining whether a security module of the vehicle receives the authentication confirmation character when the unlocking duration is greater than the preset unlocking duration;
confirming that the ignition start condition is satisfied when the authentication confirmation character is received.

7. The method of any of claims 1 to 6, wherein the device fingerprint is generated by a plurality of device fingerprint feature values collected by the terminal device, and the device fingerprint and the service key corresponding to the device fingerprint are stored in a one-to-one correspondence.

8. The method of claim 2 or 3, before the step of verifying (204, 419) an authenticity of collected voice information of a user of the vehicle when it is detected that the authentication request including an unlocking instruction, the method further comprising:
performing (415) an anti-theft authentication on the vehicle.

9. A vehicle unlocking authentication apparatus, comprising:
a receiving unit (501) configured for receiving an authentication request sent by a terminal device, wherein the authentication request comprises a device fingerprint of the terminal device and a first authentication code;
a searching unit (502) configured for searching for a pre-stored service key corresponding to the device fingerprint and calculating a second authentication code based on the device fingerprint and the service key;
the vehicle unlocking authentication apparatus being **characterized by** further comprising:
a first calculation sub-unit (5031) configured for performing an XOR operation on a first random number and the service key to obtain an XOR value, when it is detected that the first authentication code is the same as the second authentication code,
a sending sub-unit (5032) configured for sending a first response including the XOR value to the terminal device, wherein the terminal device calculates a third authentication code according to the first response and feeds back a second response including the third authentication code;
a second calculation sub-unit (5033) configured for calculating a fourth authentication code according to the device fingerprint, the service key, and the first random number, when the second response is received; and
a confirming sub-unit (5034) configured for confirming that an unlocking authentication for the vehicle from the terminal device is completed, when it is detected that the third authentication code is the same as the fourth authentication code.

10. The vehicle unlocking authentication apparatus of claim 9, further comprising:
an authentication unit (504) configured for verifying an authenticity of collected voice information of a user of the vehicle when it is detected that the authentication request including an unlocking instruction;
a generating unit (505) configured for generating an authentication confirmation character and a second random number when the authenticity of the voice information is verified;
a calculation unit (506) configured for calculating a current authentication character based on the authentication confirmation character and the second random number; and
an ignition unit (507) configured for performing an ignition operation when it is detected that the current authentication character is the same as the authentication confirmation character.

11. The vehicle unlocking authentication apparatus of claim 10, wherein the authentication unit (504) comprises:
an acquisition subunit (5041) configured for collecting the voice information of the user of the vehicle when it is detected that the authentication request includes an unlocking instruction;
a recognition subunit (5042) configured for performing a voiceprint recognition on the voice information to obtain a target voiceprint;
a comparison subunit (5043) configured for comparing the target voiceprint with a pre-stored standard voiceprint;
a determining subunit (5044) configured for confirming that the authenticity of the voice information is verified when the target voiceprint is the same as the pre-stored standard voiceprint.

12. A vehicle comprising the vehicle unlocking authentication apparatus of any of claims 9-11.

## Patentansprüche

1. Fahrzeugentriegelungsauthentifizierungsverfahren, das Folgendes beinhaltet:
Empfangen (201, 301, 403) einer von einem Endgerät gesendeten Authentifizierungsanforderung, wobei die Authentifizierungsanforderung einen Gerätefingerabdruck des Endgeräts und einen ersten Authentifizierungscode umfasst; und
Suchen (202, 302, 405) nach einem vorgespeicherten Serviceschlüssel entsprechend dem Gerätefingerabdruck und Berechnen eines zweiten Authentifizierungscodes auf der Basis des Gerätefingerabdrucks und des Serviceschlüssels;
wobei das Verfahren **dadurch gekennzeichnet ist, dass** es ferner Folgendes beinhaltet:
Durchführen (406) einer XOR-Operation an einer ersten Zufallszahl und dem Serviceschlüssel, um einen XOR-Wert zu erhalten, wenn erkannt wird, dass der erste Authentifizierungscode derselbe ist wie der zweite Authentifizierungscode,
Senden (407) einer den XOR-Wert enthaltenden ersten Antwort zu dem Endgerät, wobei das Endgerät einen dritten Authentifizierungscode gemäß der ersten Antwort berechnet und eine zweite Antwort einschließlich des dritten Authentifizierungscodes zurücksendet (411);
Berechnen (412) eines vierten Authentifizierungscodes gemäß dem Gerätefingerabdruck, dem Serviceschlüssel und der ersten Zufallszahl, wenn die zweite Antwort empfangen wird; und
Bestätigen (413), dass eine Entriegelungsauthentifizierung für das Fahrzeug durch das Endgerät abgeschlossen ist, wenn erkannt wird, dass der dritte Authentifizierungscode derselbe ist wie der vierte Authentifizierungscode.

2. Verfahren nach Anspruch 1, das nach dem Bestätigen (413), dass die Entriegelungsauthentifizierung des Fahrzeugs durch das Endgerät abgeschlossen ist, ferner Folgendes beinhaltet:
Verifizieren (204, 419) einer Authentizität von gesammelten Stimminformationen eines Benutzers des Fahrzeugs, wenn erkannt wird, dass die Authentifizierungsanforderung eine Entriegelungsanweisung enthält;
Erzeugen (205, 308, 420) eines Authentifizierungsbestätigungszeichens und einer zweiten Zufallszahl, wenn die Authentizität der Stimminformationen verifiziert ist;
Berechnen (206, 309, 423) eines aktuellen Authentifizierungszeichens auf der Basis des Authentifizierungsbestätigungszeichens und der zweiten Zufallszahl;
Durchführen (207, 424) einer Zündoperation, wenn erkannt wird, dass das aktuelle Authentifizierungszeichen dasselbe ist wie das Authentifizierungsbestätigungszeichen.

3. Verfahren nach Anspruch 2, wobei der Schritt des Verifizierens (204) einer Authentizität gesammelter Stimminformationen eines Fahrzeugbenutzers, wenn erkannt wird, dass die Authentifizierungsanforderung eine Entriegelungsanweisung enthält, Folgendes beinhaltet:
Sammeln (304) der Stimminformationen des Benutzers des Fahrzeugs, wenn erkannt wird, dass die Authentifizierungsanforderung eine Entriegelungsanweisung enthält;
Durchführen (305) einer Stimmabdruckerkennung an den Stimminformationen, um einen Zielstimmabdruck zu erhalten;
Vergleichen (306) des Zielstimmabdrucks mit einem vorgespeicherten Standardstimmabdruck;
Bestätigen (307), dass die Authentizität der Stimminformationen verifiziert ist, wenn der Zielstimmabdruck derselbe ist wie der vorgespeicherte Standardstimmabdruck.

4. Verfahren nach Anspruch 3, wobei der Schritt des Berechnens (206, 309) eines aktuellen Authentifizierungszeichens auf der Basis des Authentifizierungsbestätigungszeichens und der zweiten Zufallszahl Folgendes beinhaltet:
Durchführen einer XOR-Operation an dem Authentifizierungsbestätigungszeichen und der zweiten Zufallszahl, um einen Authentifizierungscode zu erhalten;
Durchführen einer XOR-Operation an dem Authentifizierungscode und der zweiten Zufallszahl, um das aktuelle Authentifizierungszeichen zu erhalten.

5. Verfahren nach Anspruch 4, wobei der Schritt des Durchführens (207) einer Zündoperation, wenn erkannt wird, dass das aktuelle Authentifizierungszeichen dasselbe ist wie das Authentifizierungsbestätigungszeichen, Folgendes beinhaltet:
Erkennen (310), ob Bluetooth-Verbindungsstatusinformationen empfangen werden, wenn erkannt wird, dass das aktuelle Authentifizierungszeichen dasselbe ist wie das Authentifizierungsbestätigungszeichen,
Erkennen (311), ob eine Zündstartbedingung erfüllt ist, wenn die Bluetooth-Verbindungsstatusinformationen empfangen werden;
Ausführen (312) der Zündoperation, wenn die Zündstartbedingung erfüllt ist.

6. Verfahren nach Anspruch 5, wobei der Schritt des Erkennens (311), ob eine Zündstartbedingung erfüllt ist oder nicht, wenn die Bluetooth-Verbindungsstatusinformationen empfangen werden, Folgendes beinhaltet:
Ermitteln einer Entriegelungsdauer des Fahrzeugs, wenn die Bluetooth-Verbindungsstatusinformationen empfangen werden;
Feststellen, ob die Entriegelungsdauer größer als eine voreingestellte Entriegelungsdauer ist;
Bestätigen, dass die Zündstartbedingung erfüllt ist, wenn die Entriegelungsdauer gleich der oder kleiner als die voreingestellte(n) Entriegelungsdauer ist;
Feststellen, ob ein Sicherheitsmodul des Fahrzeugs das Authentifizierungsbestätigungszeichen empfängt, wenn die Entriegelungsdauer größer als die voreingestellte Entriegelungsdauer ist;
Bestätigen, dass die Zündstartbedingung erfüllt ist, wenn das Authentifizierungsbestätigungszeichen empfangen wird.

7. Verfahren nach einem der Ansprüche 1 bis 6, wobei der Gerätefingerabdruck durch mehrere durch das Endgerät gesammelte Gerätefingerabdruckmerkmalswerte erzeugt wird und der Gerätefingerabdruck und der dem Gerätefingerabdruck entsprechende Serviceschlüssel in einer Eins-zu-Eins-Entsprechung gespeichert werden.

8. Verfahren nach Anspruch 2 oder 3, wobei das Verfahren vor dem Schritt des Verifizierens (204, 419) einer Authentizität von gesammelten Stimminformationen eines Benutzers des Fahrzeugs, wenn erkannt wird, dass die Authentifizierungsanforderung eine Entriegelungsanweisung enthält, ferner Folgendes beinhaltet:
Durchführen (415) einer Anti-Diebstahl-Authentifizierung an dem Fahrzeug.

9. Fahrzeugentriegelungsauthentifizierungsvorrichtung, die Folgendes umfasst:
eine Empfangseinheit (501), die zum Empfangen einer von einem Endgerät gesendeten Authentifizierungsanforderung konfiguriert ist, wobei die Authentifizierungsanforderung einen Gerätefingerabdruck des Endgeräts und einen ersten Authentifizierungscode umfasst;
eine Sucheinheit (502), die zum Suchen nach einem vorgespeicherten Serviceschlüssel entsprechend dem Gerätefingerabdruck und zum Berechnen eines zweiten Authentifizierungscodes auf der Basis des Gerätefingerabdrucks und des Serviceschlüssels konfiguriert ist;
wobei die Fahrzeugentriegelungsauthentifizierungsvorrichtung **dadurch gekennzeichnet ist, dass** sie ferner Folgendes umfasst:
eine erste Berechnungssubeinheit (5031), die zum Durchführen einer XOR-Operation an einer ersten Zufallszahl und dem Serviceschlüssel konfiguriert ist, um einen XOR-Wert zu erhalten, wenn erkannt wird, dass der erste Authentifizierungscode derselbe ist wie der zweite Authentifizierungscode,
eine Sendesubeinheit (5032), die zum Senden einer den XOR-Wert enthaltenden ersten Antwort zum Endgerät konfiguriert ist, wobei das Endgerät einen dritten Authentifizierungscode gemäß der ersten Antwort berechnet und eine zweite Antwort einschließlich des dritten Authentifizierungscodes zurücksendet;
eine zweite Berechnungssubeinheit (5033), die zum Berechnen eines vierten Authentifizierungscodes gemäß dem Gerätefingerabdruck, dem Serviceschlüssel und der ersten Zufallszahl konfiguriert ist, wenn die zweite Antwort empfangen wird; und
eine Bestätigungssubeinheit (5034), die konfiguriert ist zum Bestätigen, dass eine Entriegelungsauthentifizierung für das Fahrzeug vom Endgerät abgeschlossen ist, wenn erkannt wird, dass der dritte Authentifizierungscode derselbe ist wie der vierte Authentifizierungscode.

10. Fahrzeugentriegelungsauthentifizierungsvorrichtung nach Anspruch 9, die ferner Folgendes umfasst:
eine Authentifizierungseinheit (504), die zum Verifizieren einer Authentizität von gesammelten Stimminformationen eines Benutzers des Fahrzeugs konfiguriert ist, wenn erkannt wird, dass die Authentifizierungsanforderung eine Entriegelungsanweisung enthält;
eine Erzeugungseinheit (505), die zum Erzeugen eines Authentifizierungsbestätigungszeichens und einer zweiten Zufallszahl konfiguriert ist, wenn die Authentizität der Stimminformationen verifiziert wird;
eine Berechnungseinheit (506), die zum Berechnen eines aktuellen Authentifizierungszeichens auf der Basis des Authentifizierungsbestätigungszeichens und der zweiten Zufallszahl konfiguriert ist; und
eine Zündeinheit (507), die zum Durchführen einer Zündoperation konfiguriert ist, wenn erkannt wird, dass das aktuelle Authentifizierungszeichen dasselbe ist wie das Authentifizierungsbestätigungszeichen.

11. Fahrzeugentriegelungsauthentifizierungsvorrichtung nach Anspruch 10, wobei die Authentifizierungseinheit (504) Folgendes umfasst:
eine Erfassungssubeinheit (5041), die zum Sammeln der Stimminformationen des Benutzers des Fahrzeugs konfiguriert ist, wenn erkannt wird, dass die Authentifizierungsanforderung eine Entriegelungsanweisung enthält;
eine Erkennungssubeinheit (5042), die zum Durchführen einer Stimmabdruckerkennung an den Stimminformationen konfiguriert ist, um einen Zielstimmabdruck zu erhalten;
eine Vergleichssubeinheit (5043), die zum Vergleichen des Zielstimmabdrucks mit einem vorgespeicherten Standardstimmabdruck konfiguriert ist;
eine Bestimmungssubeinheit (5044), die konfiguriert ist zum Bestätigen, dass die Authentizität der Stimminformationen verifiziert ist, wenn der Zielstimmabdruck derselbe ist wie der vorgespeicherte Standardstimmabdruck.

12. Fahrzeug, das die Fahrzeugentriegelungsauthentifizierungsvorrichtung nach einem der Ansprüche 9-11 umfasst.

## Revendications

1. Un procédé d'authentification de déverrouillage de véhicule, comprenant :
la réception (201, 301, 403) d'une demande d'authentification envoyée par un dispositif terminal, où la demande d'authentification comprend une empreinte numérique de dispositif du dispositif terminal et un premier code d'authentification, et
la recherche (202, 302, 405) d'une clé de service préconservée en mémoire correspondant à l'empreinte numérique de dispositif, et le calcul d'un deuxième code d'authentification en fonction de l'empreinte numérique de dispositif et de la clé de service,
le procédé étant **caractérisé en ce qu'**il comprend en outre :
l'exécution (406) d'une opération OU exclusif sur un premier nombre aléatoire et la clé de service de façon à obtenir une valeur OU exclusif, lorsqu'il est détecté que le premier code d'authentification est le même que le deuxième code d'authentification,
l'envoi (407) d'une première réponse comprenant la valeur OU exclusif au dispositif terminal, où le dispositif terminal calcule un troisième code d'authentification en fonction de la première réponse et renvoie (411) une deuxième réponse comprenant le troisième code d'authentification,
le calcul (412) d'un quatrième code d'authentification en fonction de l'empreinte numérique de dispositif, de la clé de service et du premier nombre aléatoire, lorsque la deuxième réponse est reçue, et
la confirmation (413) qu'une authentification de déverrouillage pour le véhicule par le dispositif terminal est achevée, lorsqu'il est détecté que le troisième code d'authentification est le même que le quatrième code d'authentification.

2. Le procédé selon la Revendication 1, après l'opération de confirmation (413) que l'authentification de déverrouillage du véhicule par le dispositif terminal est achevée, comprenant en outre :
la vérification (204, 419) d'une authenticité d'informations vocales recueillies d'un utilisateur du véhicule lorsqu'il est détecté que la demande d'authentification comprend une instruction de déverrouillage,
la génération (205, 308, 420) d'un caractère de confirmation d'authentification et d'un deuxième nombre aléatoire lorsque l'authenticité des informations vocales est vérifiée,
le calcul (206, 309, 423) d'un caractère d'authentification courant en fonction du caractère de confirmation d'authentification et du deuxième nombre aléatoire,
l'exécution (207, 424) d'une opération d'allumage lorsqu'il est détecté que le caractère d'authentification courant est le même que le caractère de confirmation d'authentification.

3. Le procédé selon la Revendication 2, où l'opération de vérification (204) d'une authenticité d'informations vocales recueillies d'un utilisateur de véhicule, lorsqu'il est détecté que la demande d'authentification comprend une instruction de déverrouillage, comprend :
le recueil (304) d'informations vocales de l'utilisateur du véhicule lorsqu'il est détecté que la demande d'authentification comprend une instruction de déverrouillage,
l'exécution (305) d'une reconnaissance d'empreinte vocale sur des informations vocales de façon à obtenir une empreinte vocale cible,
la comparaison (306) de l'empreinte vocale cible à une empreinte vocale standard préconservée en mémoire,
la confirmation (307) que l'authenticité des informations vocales est vérifiée lorsque l'empreinte vocale cible est la même que l'empreinte vocale standard préconservée en mémoire.

4. Le procédé selon la Revendication 3, où l'opération de calcul (206, 309) d'un caractère d'authentification courant en fonction du caractère de confirmation d'authentification et du deuxième nombre aléatoire comprend :
l'exécution d'une opération OU exclusif sur le caractère de confirmation d'authentification et le deuxième nombre aléatoire de façon à obtenir un code d'authentification,
l'exécution d'une opération OU exclusif sur le code d'authentification et le deuxième nombre aléatoire de façon à obtenir le caractère d'authentification courant.

5. Le procédé selon la Revendication 4, où l'opération d'exécution (207) d'une opération d'allumage lorsqu'il est détecté que le caractère d'authentification courant est le même que le caractère de confirmation d'authentification comprend :
la détection (310) si des informations d'état de connexion Bluetooth sont reçues lorsqu'il est détecté que le caractère d'authentification courant est le même que le caractère de confirmation d'authentification,
la détection (311) si une condition de démarrage d'allumage est satisfaite lorsque les informations d'état de connexion Bluetooth sont reçues,
l'exécution (312) de l'opération d'allumage lorsque la condition de démarrage d'allumage est satisfaite.

6. Le procédé selon la Revendication 5, où l'opération de détection (311) si une condition de démarrage d'allumage est satisfaite ou non lorsque les informations d'état de connexion Bluetooth sont reçues comprend :
l'obtention d'une durée de déverrouillage du véhicule lorsque les informations d'état de connexion Bluetooth sont reçues,
la détermination si la durée de déverrouillage est supérieure à une durée de déverrouillage prédéfinie,
la confirmation que la condition de démarrage d'allumage est satisfaite lorsque la durée de déverrouillage est inférieure ou égale à la durée de déverrouillage prédéfinie,
la détermination si un module de sécurité du véhicule reçoit le caractère de confirmation d'authentification lorsque la durée de déverrouillage est supérieure à la durée de déverrouillage prédéfinie,
la confirmation que la condition de démarrage d'allumage est satisfaite lorsque le caractère de confirmation d'authentification est reçu.

7. Le procédé selon l'une quelconque des Revendications 1 à 6, où l'empreinte numérique de dispositif est générée par une pluralité de valeurs de caractéristique d'empreinte numérique de dispositif recueillies par le dispositif terminal, et l'empreinte numérique de dispositif et la clé de service correspondant à l'empreinte numérique de dispositif sont conservées en mémoire dans une correspondance biunivoque.

8. Le procédé selon la Revendication 2 ou 3, avant l'opération de vérification (204, 419) d'une authenticité d'informations vocales recueillies d'un utilisateur du véhicule lorsqu'il est détecté que la demande d'authentification comprend une instruction de déverrouillage, le procédé comprenant en outre :
l'exécution (415) d'une authentification d'antivol sur le véhicule.

9. Un appareil d'authentification de déverrouillage de véhicule, comprenant :
une unité de réception (501) configurée pour la réception d'une demande d'authentification envoyée par un dispositif terminal, où la demande d'authentification comprend une empreinte numérique de dispositif du dispositif terminal et un premier code d'authentification,
une unité de recherche (502) configurée pour la recherche d'une clé de service préconservée en mémoire correspondant à l'empreinte numérique de dispositif et pour le calcul d'un deuxième code d'authentification en fonction de l'empreinte numérique de dispositif et de la clé de service,
l'appareil d'authentification de déverrouillage de véhicule étant **caractérisé en ce qu'**il comprend en outre :
une première sous-unité de calcul (5031) configurée pour l'exécution d'une opération OU exclusif sur un premier nombre aléatoire et la clé de service de façon à obtenir une valeur OU exclusif, lorsqu'il est détecté que le premier code d'authentification est le même que le deuxième code d'authentification,
une sous-unité d'envoi (5032) configurée pour l'envoi d'une première réponse comprenant la valeur OU exclusif au dispositif terminal, où le dispositif terminal calcule un troisième code d'authentification en fonction de la première réponse et renvoie une deuxième réponse comprenant le troisième code d'authentification,
une deuxième sous-unité de calcul (5033) configurée pour le calcul d'un quatrième code d'authentification en fonction de l'empreinte numérique de dispositif, de la clé de service et du premier nombre aléatoire, lorsque la deuxième réponse est reçue, et
une sous-unité de confirmation (5034) configurée pour la confirmation qu'une authentification de déverrouillage pour le véhicule à partir du dispositif terminal est achevée, lorsqu'il est détecté que le troisième code d'authentification est le même que le quatrième code d'authentification.

10. L'appareil d'authentification de déverrouillage de véhicule selon la Revendication 9, comprenant en outre :
une unité d'authentification (504) configurée pour la vérification d'une authenticité d'informations vocales recueillies d'un utilisateur du véhicule lorsqu'il est détecté que la demande d'authentification comprend une instruction de déverrouillage,
une unité de génération (505) configurée pour la génération d'un caractère de confirmation d'authentification et d'un deuxième nombre aléatoire lorsque l'authenticité d'informations vocales est vérifiée,
une unité de calcul (506) configurée pour le calcul d'un caractère d'authentification courant en fonction du caractère de confirmation d'authentification et du deuxième nombre aléatoire, et
une unité d'allumage (507) configurée pour l'exécution d'une opération d'allumage lorsqu'il est détecté que le caractère d'authentification courant est le même que le caractère de confirmation d'authentification.

11. L'appareil d'authentification de déverrouillage de véhicule selon la Revendication 10, où l'unité d'authentification (504) comprend :
une sous-unité d'acquisition (5041) configurée pour le recueil d'informations vocales de l'utilisateur du véhicule lorsqu'il est détecté que la demande d'authentification comprend une instruction de déverrouillage,
une sous-unité de reconnaissance (5042) configurée pour l'exécution d'une reconnaissance d'empreinte vocale sur des informations vocales de façon à obtenir une empreinte vocale cible,
une sous-unité de comparaison (5043) configurée pour la comparaison de l'empreinte vocale cible à une empreinte vocale standard préconservée en mémoire,
une sous-unité de détermination (5044) configurée pour la confirmation que l'authenticité d'informations vocales est vérifiée lorsque l'empreinte vocale cible est la même que l'empreinte vocale standard préconservée en mémoire.

12. Un véhicule comprenant l'appareil d'authentification de déverrouillage de véhicule selon l'une quelconque des Revendications 9 à 11.
